# EUROPEAN PATENT SPECIFICATION

(11) **EP 3 700 294 B1**
(45) Date of publication and mention of the grant of the patent: **09.03.2022**
(21) Application number: 20156786.4
(22) Date of filing: 12.02.2020
(51) Int. Cl.: H04W 76/15, H04W 84/12, H04W 88/08

(54) **METHOD FOR DATA TRANSMISSION USING MULTIPLE WIFI LINKS**
VERFAHREN ZUR DATENÜBERTRAGUNG MIT VERSCHIEDENEN WIFI VERBINDUNGEN
PROCÉDÉ DE TRANSMISSION DE DONNÉES AVEC DES LIENS WIFI MULTIPLES

(30) Priority: 12.02.2019 CN 201910111498
(43) Date of publication of application: 26.08.2020
(73) Proprietor: GUANGDONG OPPO MOBILE TELECOMMUNICATIONS CORP., LTD., Wusha, Chang'an Dongguan, Guangdong 523860 (CN)
(72) Inventor: HUANG, Yuan, Dongguan, Guangdong 523860 (CN); KE, Shixing, Dongguan, Guangdong 523860 (CN)
(74) Representative: Manitz Finsterwald Patent- und Rechtsanwaltspartnerschaft mbB

(56) References cited:
- WO-A1-2014/070206
- US-A1- 2009 180 449
- US-A1- 2015 023 245

## Description

### TECHNICAL FIELD

This application relates to the technical technology of electronic communication, and particularly to a method for data transmission and related products. Related technologies are known from US 2015/023245 Al, US 2009/180449 Al, and WO 2014/070206 Al.

### BACKGROUND

At present, electronic devices in the market support data transmission through a cellular network module, and data transmission through a local area network communication module, such as a wireless-fidelity (Wi-Fi) module and a Bluetooth module. For example, if a Bluetooth function of a mobile phone is enabled by a user, the mobile phone will switch from a cellular network operating mode to a Bluetooth access mode and scan a device that can be paired for pairing and connection.

### SUMMARY

The present invention is defined in the independent claim. According to a first aspect, implementations of the application provide a method for data transmission. according to claim 1. The method is applicable to an electronic device. A first wireless-fidelity (Wi-Fi) link and a second Wi-Fi link are established between the electronic device and at least one terminal device, where the first Wi-Fi link is operable in a station mode and the second Wi-Fi link is operable in a Wi-Fi peer-to-peer (P2P) mode. The method includes the following.

Data transmission is performed with the at least one terminal device over the first Wi-Fi link and the second Wi-Fi link simultaneously, where a transmission frequency band for data transmission over the first Wi-Fi link is different from a transmission frequency band for data transmission over the second Wi-Fi link.

According to a second aspect, implementations of the application provide an electronic device. The electronic device includes a communication controller, at least one processor, and a computer readable storage coupled to the at least one processor and storing at least one computer executable instruction thereon. The communication controller is configured to establish a first Wi-Fi link and a second Wi-Fi link between the electronic device and at least one terminal device, where the first Wi-Fi link is operable in a station mode and the second Wi-Fi link is operable in a Wi-Fi point-to-point (P2P) mode. The at least one computer executable instruction, when executed by the at least one processor, causes the at least one processor to execute the method of the first aspect.

According to a third aspect, implementations of the application provide a non-transitory computer readable storage medium. The non-transitory computer readable storage medium is configured to store a computer program which, when executed by a processor, causes the processor to execute the method of the first aspect.

### BRIEF DESCRIPTION OF THE DRAWINGS

To describe technical solutions in implementations of the present disclosure more clearly, the following briefly introduces accompanying drawings required for illustrating the implementations. Apparently, the accompanying drawings in the following description illustrate some implementations of the present disclosure.
FIG. 1 is a schematic structural diagram illustrating an electronic device according to implementations.
FIG. 2 is a schematic flow chart illustrating a method for data transmission according to implementations.
FIG. 3 is a schematic structural diagram illustrating an electronic device according to implementations.
FIG. 4 is a block diagram illustrating functional units of a device for data transmission according to implementations.

### DETAILED DESCRIPTION

In order to enable those skilled in the art to better understand solutions of the present disclosure, technical solutions in implementations of the present disclosure will be described clearly and completely hereinafter with reference to the accompanying drawings in the implementations of the present disclosure. Apparently, the described implementations are merely some rather than all implementations of the present disclosure.

The terms "first", "second", and the like used in the specification, the claims, and the accompany drawings of the present disclosure are used to distinguish different objects rather than describe a particular order. The terms "include", "comprise", and "have" as well as variations thereof are intended to cover non-exclusive inclusion. For example, a process, method, system, product, or apparatus including a series of steps or units is not limited to the listed steps or units, on the contrary, it can optionally include other steps or units that are not listed; alternatively, other steps or units inherent to the process, method, product, or device can be included either.

The term "implementation" referred to herein means that a particular feature, structure, or feature described in conjunction with the implementation may be contained in at least one implementation of the present disclosure. The phrase appearing in various places in the specification does not necessarily refer to the same implementation, nor does it refer to an independent or alternative implementation that is mutually exclusive with other implementations. It is expressly and implicitly understood by those skilled in the art that an implementation described herein may be combined with other implementations.

The electronic device involved in the implementations of the present disclosure may include various handheld devices, in-vehicle devices, wearable devices, computing devices that have wireless communication functions or other processing devices connected to the wireless modem, as well as various forms of user equipment (UE), mobile stations (MS), terminal devices, and the like.

The following will describe the implementations in detail.

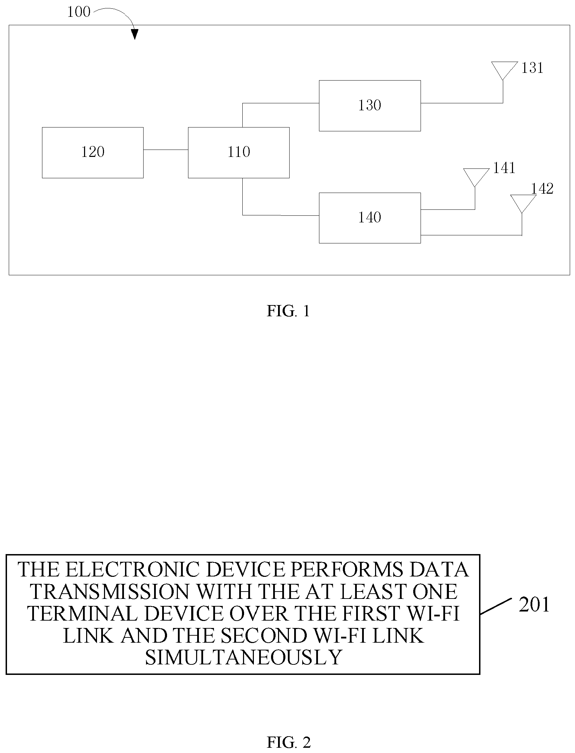

FIG. 1 is a schematic structural diagram illustrating an electronic device 100 according to implementations. The electronic device 100 includes an application processor (AP) 110, a baseband modem (also known as baseband chip) 120, a cellular module 130, a cellular antenna 131, a wireless-fidelity (Wi-Fi) module 140, a first Wi-Fi antenna 141, and a second Wi-Fi antenna 142. The application processor AP 110 is coupled with the baseband modem 120. The baseband modem 120 is coupled with the cellular module 130 and the Wi-Fi module 140. The cellular module 130 is coupled with the cellular antenna 131. The Wi-Fi module 140 is coupled with the first Wi-Fi antenna 141 and the second Wi-Fi antenna 142. A single Wi-Fi operating mode includes a station mode, hotspot soft access point (AP) mode (shortened as soft AP mode), or peer-to-peer (P2P) mode. The station mode refers to a mode where the electronic device serves as a client, which can access to an AP. The soft AP mode refers to a mode where the electronic device serves as an AP, which allows other clients to access to. The P2P mode refers to a mode where each party has the same capabilities and either party can initiate a communication session. A dual Wi-Fi operating mode includes any of: station mode + station mode, station mode + soft AP mode, station mode + P2P mode, soft AP mode + soft AP mode, soft AP mode + P2P mode, and P2P mode + P2P mode. The electronic device 100 of the implementation can switch between the single Wi-Fi operating mode and the dual Wi-Fi operating mode, where the dual Wi-Fi operating mode is station mode + P2P mode. Since the Wi-Fi module is coupled with the first Wi-Fi antenna 141 and the second Wi-Fi antenna 142, from a hardware perspective, data transmission over two Wi-Fi links can be achieved, that is, data is transmitted through the first Wi-Fi antenna 141 and the second Wi-Fi antenna 142 respectively at the same time.

FIG. 2 is a schematic flow chart illustrating a method for data transmission according to implementations. The method is applicable to the electronic device of FIG. 1. A first Wi-Fi link and a second Wi-Fi link are established between the electronic device and at least one terminal device, where the first Wi-Fi link is operable in a station mode and the second Wi-Fi link is operable in a Wi-Fi P2P mode (shortened as P2P mode). The electronic device can enable both the station mode and the P2P mode. The method begins at 201.

At 201, the electronic device performs data transmission with the at least one terminal device over the first Wi-Fi link and the second Wi-Fi link simultaneously, where a transmission frequency band for data transmission over the first Wi-Fi link is different from a transmission frequency band for data transmission over the second Wi-Fi link.

That is, the station mode of the electronic device allows data transmission over the first Wi-Fi link and the P2P mode of the electronic device allows data transmission over the second Wi-Fi link.

The first Wi-Fi link and the second Wi-Fi link may be configured in a 2.4G Wi-Fi frequency band and a 5G Wi-Fi frequency band, respectively.

In terms of encryption manners, transmission rates, attenuation speeds, and anti-interference capabilities, the capability of the first Wi-Fi link is different from that of the second Wi-Fi link. The electronic device may classify data to-be-transmitted according to the above differences, so as to transmit data adapted to different Wi-Fi links, thereby implementing offloading transmission of the data to-be-transmitted.

The at least one terminal device can be embodied as one terminal device, and in this case, both the first Wi-Fi link and the second Wi-Fi link are established between the electronic device and the one terminal device at the same time. The at least one terminal device can be embodied as two terminal devices, and in this case, the first Wi-Fi link is established between the electronic device and one of the two terminal devices while the second Wi-Fi link is established between the electronic device and the other of the two terminal devices.

According to the implementations, the first Wi-Fi link and the second Wi-Fi link are established between the electronic device and the at least one terminal device, where the first Wi-Fi link is operable in the station mode and the second Wi-Fi link is operable in the Wi-Fi P2P mode. The electronic device performs the data transmission with the at least one terminal device over the first Wi-Fi link and the second Wi-Fi link simultaneously, where the transmission frequency band for data transmission over the first Wi-Fi link is different from the transmission frequency band for data transmission over the second Wi-Fi link. In this way, the electronic device can enable both the station mode and the P2P mode to perform wireless connection and the data transmission with the at least one terminal device. Compared with a single-channel data transmission mode where data is transmitted over a single channel, the multiple-channel data transmission mode can improve efficiency and flexibility of the data transmission of the electronic device and expand capability of the data transmission of electronic device.

In at least one implementation, the data transmission is performed with the at least terminal device via simultaneous use of the first Wi-Fi link and the second Wi-Fi link as follows. Transmit (in other words, communicate) first data with a first terminal device in the at least one terminal device over the first Wi-Fi link. Transmit second data with a second terminal device in the at least one terminal device over the second Wi-Fi link, where the first terminal device is the same as or different from the second terminal device.

The action of "transmit" herein includes receiving and sending. For example, over the first Wi-Fi link, the electronic device can send to the first terminal device the first data and receive from the first terminal device the first data. Similarly, over the second Wi-Fi link, the electronic device can send to the second terminal device the second data and receive from the second terminal device the second data.

The electronic device can transmit the first data and the second data in parallel, i.e., perform data transmission via simultaneous use of the first Wi-Fi link and the second Wi-Fi link, improving efficiency of the data transmission.

The first terminal device and the second terminal device can be the same or different. In the case that the first terminal device and the second terminal device are different, a Wi-Fi module of the first terminal device supports the soft AP mode. In this case, the first Wi-Fi link is established between the electronic device in the station mode and the first terminal device in the soft AP mode, and the second Wi-Fi link is established between the electronic device in the P2P mode and the second terminal device. If the first terminal device enables a hotspot AP1 and the electronic device enables a hotspot AP2, then a transmission link where the electronic device accesses AP1 is the first Wi-Fi link, and a transmission link where the second terminal device accesses AP2 is the second Wi-Fi link.

The first Wi-Fi link established between the electronic device and the first terminal device can be various. For an example, the Wi-Fi module of the first terminal device supports the soft AP mode, and the first Wi-Fi link is established between the Wi-Fi channel of the electronic device in the station mode and the Wi-Fi channel of the first terminal device in the soft AP mode. In such case, the first terminal device is an electronic device. For another example, the first Wi-Fi link is established between the electronic device and a router. In such case, the first terminal device is a router.

The electronic device can transmit data of the same type over the first Wi-Fi link and the second Wi-Fi link, such as transmit video data, picture data, text data, etc. The data of the same type can be from the same application or different applications, which is not limited herein. Alternatively, the electronic device can transmit data of a first type over the first Wi-Fi link and data of a second type over the second Wi-Fi link. The data of the first type or the data of the second type includes audio, video, picture, text, etc. The data of the first type and the data of the second type can be from the same application or different applications, which is not limited herein.

According to the implementations, the electronic device can transmit the first data and the second data over the first Wi-Fi link and the second Wi-Fi link with one terminal device or two terminal devices at the same time, so as to achieve dual-channel data transmission, improving flexibility and efficiency of the data transmission of the electronic device.

In at least one implementation, the first data includes at least one of: local data of the electronic device, local data of the first terminal device, and data received by the first terminal device from a first network side. The second data includes at least one of: the local data of the electronic device, local data of the second terminal device, data received by the electronic device from a second network side through a cellular network module, and data received by the electronic device from the first network side over the first Wi-Fi link.

Each of the at least one terminal device is connected to a hotspot AP enabled by the electronic device. The at least one terminal device can include one terminal device or multiple terminal devices, and the number of terminal devices that are allowed to access to the hotspot AP can be restricted by the electronic device according to a preset strategy. The preset strategy includes the following.

First strategy. The number is restricted based on device identity or user identity, such as a preset whitelist is provided, and only terminals in the whitelist are allowed to access to the hotspot AP.

Second strategy. The number is restricted based on a password-based login authentication mechanism, that is, password authentication is required for access, and only terminals with successful authentication are allowed to access to the hotspot AP.

Third strategy. The number is restricted based on user selection. Terminals that are about to apply for access are displayed in a list for the user of the electronic device to select, and a terminal(s) selected is allowed to access to the hotspot AP.

Fourth strategy. The number is dynamically determined based on status of a system of the electronic device (local device), for example, based on access time and number, such as dynamically determining the number based on current power status of the local device.

The local data includes various types of data such as files, pictures, audio, and video pre-stored in a local storage space. The data from the first network side or the second network side refers to various types of data obtained by the device (terminal device and/or electronic device) through a network (for example, a cellular network and a Bluetooth network, etc.) other than a current Wi-Fi network.

According to the implementations, various types of data can be flexibly transmitted between the electronic device and the peer device (i.e., the at least one terminal device) over the first Wi-Fi link and the second Wi-Fi link, improving the comprehensiveness of data transmission.

In at least one implementation, the first terminal device is different from the second terminal device and the second data is data received by the electronic device from a second network side through a cellular network module, and transmit the second data with the second terminal device in the at least one terminal device over the second Wi-Fi link as follows.

A first network service request is received from the second terminal device over the second Wi-Fi link. The first network service request is sent, with the cellular network module, to a network device at the second network side. First response data for the first network service request is received, with the cellular network module, from the network device at the second network side. The first response data is sent to the second terminal device over the second Wi-Fi link.

The first network service request can be Internet access requests from multiple applications of the electronic device, such as a video data download request from a video application, a message sending request or a message receiving request from an instant messaging application, and the like, which is not limited herein.

The network device at the second network side is a network device connected by the electronic device through the cellular network module, which is not limited herein.

According to the implementations, the electronic device supports providing a shared mobile network to the second terminal device over the second Wi-Fi link, so that the second terminal device can complete the Internet access service only through the P2P mode even no mobile network data is available, improving convenience and achievability of data transmission.

In at least one implementation, the first terminal device is different from the second terminal device and the second data is data received by the electronic device from a first network side over the first Wi-Fi link, and transmit the second data with the second terminal device in the at least one terminal device over the second Wi-Fi link as follows.

A second network service request is received from the second terminal device over the second Wi-Fi link. The second network service request is sent to the first terminal device over the first Wi-Fi link, where the second network service request is used for the first terminal device to receive second response data for the second network service request, which is returned from a network device at the first network side, after the first terminal device sends the second network service request to the network device at the first network side. The second response data is received from the first terminal device over the first Wi-Fi link. The second response data is sent to the second terminal device over the second Wi-Fi link.

That is, the second response data is received by the first terminal device from a network device at the first network side after the first terminal device forwards the second network service request to the network device at the first network side.

The second network service request is the same as the first network service request, and details are not described herein. The network device at the first network side is a network device connected to the first terminal device.

According to the implementations, when the second terminal device is not connected to a mobile network device, the electronic device can forward the second network service request over the first Wi-Fi link and share a mobile network through the first terminal device, improving flexibility and diversity of data transmission.

In the implementation, the first data is data received by the first terminal device from the first network side, and the second network service request is sent to the first terminal device over the first Wi-Fi link as follows. Determine a priority of the second network service request and a priority of a third network service request, where the third network service request is from the electronic device. The second network service request is sent to the first terminal device over the first Wi-Fi link according to the priority of the second network service request. That is, the second network service request is sent to the first terminal device over the first Wi-Fi link based on a determination that the priority of the second network service request is higher than that of the third network service request.

In the case that the first data is data received by the first terminal device from the first network side, the first data is transmitted with the first terminal device in the at least one terminal device over the first Wi-Fi link as follows. The electronic device sends the third network service request to the first terminal device over the first Wi-Fi link. The first terminal device sends the third network service request to the network device at the first network side. The first terminal device receives from the network device at the first network side third response data for the third network service request. The first terminal device forwards the third response data to the electronic device. Therefore, in the case that the first data is the data received by the first terminal device from the first network side and the second data is data received by the electronic device from the first network side over the first Wi-Fi link, the electronic device needs to transmit the second network service request over the first Wi-Fi link, and also needs to transmit the third network service request through the over the first Wi-Fi link.

For example, the electronic device can use the first Wi-Fi link according to mechanisms such as priority and time division multiplexing, to implement network data access requests of different devices.

Various manners can be used to determine the priority of the second network service request and the priority of the third network service request. In one example, the electronic device can determine the priorities according to a time sequence of receiving the second network service request and the third network service request. In another example, the electronic device can determine the priorities according to a preset priority strategy, for example, a service from a local device (i.e., the third network service request from the electronic device) always having the highest priority. The disclosure is not limited herein.

According to the implementations, in the case that the electronic device communicates with the first terminal device via the first Wi-Fi link and the second terminal device communicates with the first terminal device via the electronic device and the first Wi-Fi link, the electronic device can implement network data access requests of different devices according to the mechanisms such as time division multiplexing and priority, thereby improving intelligence and flexibility of network data transmission of the electronic device.

In at least one implementation, after the second network service request is received from the second terminal device over the second Wi-Fi link and before the second response data is sent to the second terminal device over the second Wi-Fi link, the following is further conducted. Transmit third data with the second terminal device over the second Wi-Fi link, where the third data includes at least one of: local data of the electronic device, local data of the second terminal device, data received by the electronic device from a second network side through a cellular network module, and data received by the electronic device from the first network side over the first Wi-Fi link.

The data received by the electronic device from the second network side through the cellular network module and the data received by the electronic device from the first network side over the first Wi-Fi link each are not the second response data. The above data can be data corresponding to a network service request which is prior to or subsequent to the second network service request corresponding to the second response data. The disclosure is not limited herein.

When the electronic device processes the network service request from the second terminal device over the first Wi-Fi link, that is, when the second Wi-Fi link is idle, other data transmission can be processed over the second Wi-Fi link at the same time. In this way, multiple data can be transmitted in parallel and efficiency of data transmission can be improved.

In at least one implementation, the method further includes the following. A dual Wi-Fi operating mode of a Wi-Fi module of the electronic device is enabled. The first Wi-Fi link with the first terminal device is established. The second Wi-Fi link with the second terminal device is established.

For example, for protocols used in establishing the first Wi-Fi link and the second Wi-Fi link by the electronic device, reference can be made to related Wi-Fi protocol mechanisms, which will not be repeated herein. In addition, the electronic device can enable the dual Wi-Fi operating mode under different trigger condition and in various manners, and which is not limited herein.

In an example, the electronic device can provide a function button dedicated for enabling the dual Wi-Fi operating mode. When the electronic device detects that the function button is clicked by a user, the dual Wi-Fi operating mode is enabled.

In another example, the electronic device can determine whether to enable the dual Wi-Fi operating mode based on scenes. When the electronic device identifies that the current scene is in a preset scene requiring the dual Wi-Fi operating mode to be enabled, the local device automatically enables the dual Wi-Fi operating mode.

In still another example, the electronic device can determine whether to enable the dual Wi-Fi operating mode based on an enabling request of a peer device, and enable the dual Wi-Fi operating mode after deciding to respond to the enabling request.

According to the implementations, the electronic device can flexibly enable the dual Wi-Fi operating mode and establish the first Wi-Fi link and the second Wi-Fi link, to achieve multi-link data transmission and improve the efficiency and flexibility of data transmission.

In at least one implementation, a function achieved by the electronic device over the first Wi-Fi link and the second Wi-Fi link includes at least one of: mobile phone transfer, file transfer, game, network sharing, and one-way control function for the at least one terminal device.

The following elaborates the above process in combination with some typical application scenarios.

Scenario 1: mobile phone transfer. In scenario 1, the electronic device is an old mobile phone of a user and the at least one terminal device is a new mobile phone of the user. The user selects a mobile phone transfer function of the old mobile phone (local device) and selects the option "I am the old mobile phone". The old mobile phone then enables a dual Wi-Fi connection function of a Wi-Fi module, and the local device creates a first hotspot API, and prompts the user to enable the mobile phone transfer function of the new mobile phone. The user enables a mobile phone transfer function of the new mobile phone and selects the option "I am a new mobile phone". The new mobile phone then enables a dual Wi-Fi connection function of a Wi-Fi module, searches for API, and enables a P2P mode to request access to establish a first Wi-Fi link with the old mobile phone. The new mobile phone also accesses a second hotspotAP2 corresponding to a router device. The old mobile phone obtains the second hotspot AP2 and enables a station mode to access the second hotspot AP2, that is, a second Wi-Fi link is established between the old mobile phone and the new mobile phone through the second hotspot AP2. In such case, the old mobile phone can divide data of the local device into a first part and a second part according to a preset offloading strategy, and transmit the first part of the data over the first Wi-Fi link and the second part of the data over the second Wi-Fi link. The specific form of the preset offloading strategy may be various, such as dividing according to data type, dividing according to storage address, dividing according to storage time, dividing according to user setting, etc., which are not limited here.

Scenario 2: smart home. In scenario 2, the electronic device is a mobile phone of a user, and the mobile phone is equipped with a dual Wi-Fi function button. When the user arrives at home, he/she can click the function button to enable a dual Wi-Fi function of a Wi-Fi module, and enable a P2P mode and a station mode. The mobile phone creates a first hotspot AP1 and scans a second hotspot AP2 (the second hotspot is a hotspot of the smart home). The first terminal device is a smart TV box (used to interconnect with the mobile phone to implement functions such as video on demand) in the living room, enables a soft AP mode, and creates the second hotspot AP2. The mobile phone requests access to establish a first Wi-Fi link with the first terminal device when the mobile phone scans the second hotspot AP2. The second terminal device is a laptop (for necessary Internet access functions when the user works) of the user, and the user can operate the laptop to access AP1 to establish a second Wi-Fi link with the mobile phone. The user can send the pre-downloaded movie (of the mobile phone) to the smart TV over the first Wi-Fi link, while operate the laptop to perform various types of Internet access services over the second Wi-Fi link.

The laptop performs various types of Internet access services over the second Wi-Fi link as follows. In one example, the Internet access service is implemented through a cellular network module of the mobile phone. In another example, the Internet access service is forwarded by the mobile phone and is implemented over the first Wi-Fi link (in this case, the first terminal device also has a dual Wi-Fi function, creates the second hotspot AP2, and connects to a device such as a router). The Internet access service is for example video download. The mobile phone can determine whether to use the cellular network module or the first Wi-Fi link to implement the Internet access service according to a preset selection strategy. The specific form of the preset selection strategy may be determined comprehensively according to link capability and data characteristics of data to-be-transmitted, which is not limited here.

Scenario 3: single-link network sharing. In scenario 3, the electronic device is a mobile phone of a parent, the first terminal device is a smart speaker (accessing to a second wireless hotspot AP2 of the home), and the second terminal device is a tablet computer for children. The parent can set the mobile phone of the parent to enable a Wi-Fi connection function of a Wi-Fi module. The mobile phone of the parent enables a first hotspot API, and allows the tablet computer to access to establish a second Wi-Fi link with the tablet computer. The mobile phone of the parent at the same time can access AP2 and establish a first Wi-Fi link with the smart speaker. Furthermore, the parent can set only the first Wi-Fi link to support a network sharing function and set an Internet access restriction strategy of the second Wi-Fi link, through the mobile phone of the parent. Therefore, on the one hand, children can watch online cartoons, etc., and on the other hand, children's online environment can be safe and pure. At the same time, the mobile phone of the parent can send network data to the smart speaker over the first Wi-Fi link.

If the mobile phone of the parent detects multiple Internet access requests at a same time period, for example, a music download request from the mobile phone of the parent and a video download request from the tablet computer, the multiple Internet access requests need to be prioritized. The priorities of the multiple Internet access requests can be determined in various manner, such as sorting based on initiators of the multiple Internet access requests, or sorting based on service types associated with the multiple Internet access requests, etc., which is not limited here.

Scenario 4: dual-link network sharing. In scenario 4, the electronic device is a primary mobile phone installed with a local phone card, the first terminal device is a vehicle-mounted device, where the vehicle-mounted device (such as a car music service) has been connected to a car hotspot (called AP2), and the second terminal device is a secondary mobile phone. When a user drives to certain areas (such as renting a car abroad and the car hotspot has not renewed network tariffs), the user can enable a dual Wi-Fi function of the primary mobile phone. The primary mobile phone creates a first hotspot API, scans to AP2, accesses AP2, and establishes a first Wi-Fi link with the vehicle-mounted device to achieve interconnection. The secondary mobile phone scans to API, accesses API, and establishes a second Wi-Fi link with the primary mobile phone to achieve interconnection. Therefore, both the vehicle-mounted device and the secondary mobile phone can achieve network interconnection through the primary mobile phone. The primary mobile phone supports a conflict handling mechanism for multiple Internet access requests at a same time period. The conflict handling mechanism can have various strategies, such as sorting based on initiators of the multiple Internet access requests, or sorting based on service types associated with the multiple Internet access requests, etc., which is not limited here.

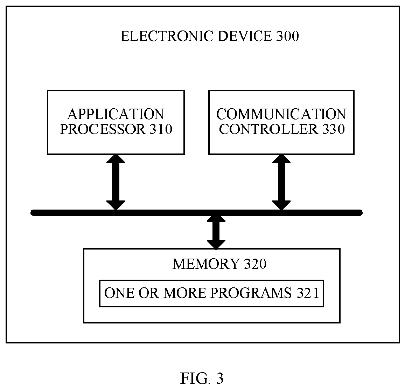

In accordance with the implementations of FIG. 2, FIG. 3 is a schematic structural diagram illustrating an electronic device 300 according to implementations. As illustrated in FIG. 3, the electronic device 300 includes at least one processor (such as an application processor 310), a computer readable storage (such as a memory 320) configured to store at least one computer executable instruction (such as one or more programs 321), and a communication controller 330. The communication controller 330 is configured to establish a first Wi-Fi link and a second Wi-Fi link between the electronic device and at least one terminal device, where the first Wi-Fi link is operable in a station mode and the second Wi-Fi link is operable in a Wi-Fi P2P mode. The one or more programs 321 are configured to be executed by the application processor 310 and include instructions configured to perform the following.

Data transmission is performed with the at least one terminal device over the first Wi-Fi link and the second Wi-Fi link, where a transmission frequency band for data transmission over the first Wi-Fi link is different from a transmission frequency band for data transmission over the second Wi-Fi link.

According to the implementations, the first Wi-Fi link and the second Wi-Fi link are established between the electronic device and the at least one terminal device, where the first Wi-Fi link supports the station mode and the second Wi-Fi link supports the Wi-Fi P2P mode. The electronic device performs the data transmission with the at least one terminal device over the first Wi-Fi link and the second Wi-Fi link, where the transmission frequency band for data transmission over the first Wi-Fi link is different from the transmission frequency band for data transmission over the second Wi-Fi link. In this way, the electronic device can enable both the station mode and the P2P mode to perform wireless connection and the data transmission with the at least one terminal device. Compared with a single-channel data transmission mode, the multiple-channel data transmission mode can improve efficiency and flexibility of the data transmission of the electronic device and expand capability of the data transmission of electronic device.

In at least one implementation, in terms of performing the data transmission with the at least terminal device over the first Wi-Fi link and the second Wi-Fi link, the instructions of the one or more programs 321 are configured to perform the following. Transmit first data with a first terminal device in the at least one terminal device over the first Wi-Fi link. Transmit second data with a second terminal device in the at least one terminal device over the second Wi-Fi link.

In at least one implementation, the first data includes at least one of: local data of the electronic device, local data of the first terminal device, and data received by the first terminal device from a first network side. The second data includes at least one of: the local data of the electronic device, local data of the second terminal device, data received by the electronic device from a second network side through a cellular network module, and data received by the electronic device from the first network side over the first Wi-Fi link.

In at least one implementation, the first terminal device is different from the second terminal device and the second data is data received by the electronic device from a second network side through a cellular network module. In terms of transmitting the second data with the second terminal device in the at least one terminal device over the second Wi-Fi link, the instructions of the one or more programs 321 are configured to perform the following. A first network service request is received from the second terminal device over the second Wi-Fi link. The first network service request is sent, with the cellular network module, to a network device at the second network side. First response data for the first network service request is received, with the cellular network module, from the network device at the second network side. The first response data is sent to the second terminal device over the second Wi-Fi link.

In at least one implementation, the first terminal device is different from the second terminal device and the second data is data received by the electronic device from a first network side over the first Wi-Fi link. In terms of transmitting the second data with the second terminal device in the at least one terminal device over the second Wi-Fi link, the instructions of the one or more programs 321 are configured to perform the following. A second network service request is received from the second terminal device over the second Wi-Fi link. The second network service request is sent to the first terminal device over the first Wi-Fi link. Second response data is received from the first terminal device over the first Wi-Fi link, where the second response data is received by the first terminal device from a network device at the first network side after the first terminal device forwards the second network service request to the network device at the first network side. The second response data is sent to the second terminal device over the second Wi-Fi link.

In at least one implementation, the first data is data received by the first terminal device from the first network side. In terms of sending the second network service request to the first terminal device over the first Wi-Fi link, the instructions of the one or more programs 321 are configured to perform the following. Determine a priority of the second network service request and a priority of a third network service request, where the third network service request is from the electronic device. The second network service request is sent to the first terminal device over the first Wi-Fi link, based on a determination that the priority of the second network service request is higher than that of the third network service request.

In at least one implementation, the one or more programs 321 further include instructions configured to perform the following. Transmit third data with the second terminal device over the second Wi-Fi link, after the second network service request is received from the second terminal device over the second Wi-Fi link and before the second response data is sent to the second terminal device over the second Wi-Fi link, where the third data includes at least one of: local data of the electronic device, local data of the second terminal device, data received by the electronic device from a second network side through a cellular network module, and data received by the electronic device from the first network side over the first Wi-Fi link.

In at least one implementation, the one or more programs 321 further include instructions configured to perform the following. A dual Wi-Fi operating mode of a Wi-Fi module of the electronic device is enabled. The first Wi-Fi link with the first terminal device is established. The second Wi-Fi link with the second terminal device is established.

In at least one implementation, a function achieved by the electronic device over the first Wi-Fi link and the second Wi-Fi link includes at least one of: mobile phone transfer, file transfer, game, network sharing, and one-way control function for the at least one terminal device.

The foregoing solution of the implementations of the disclosure is mainly described from the viewpoint of execution process of the method. It can be understood that, in order to implement the above functions, the mobile terminal includes hardware structures and/or software modules corresponding to the respective functions. Those skilled in the art should readily recognize that, in combination with the example units and scheme steps described in the implementations disclosed herein, the present disclosure can be implemented in hardware or a combination of the hardware and computer software. Whether a function is implemented by way of the hardware or hardware driven by the computer software depends on the particular application and design constraints of the technical solution.

According to the implementations of the disclosure, functional units may be divided for the mobile terminal in accordance with the foregoing method examples. For example, each functional unit may be divided according to each function, and two or more functions may be integrated in one processing unit. The above-mentioned integrated unit can be implemented in the form of hardware or software functional units. It should be noted that the division of units in the implementations of the present disclosure is schematic, and is merely a logical function division, and there may be other division manners in actual implementation.

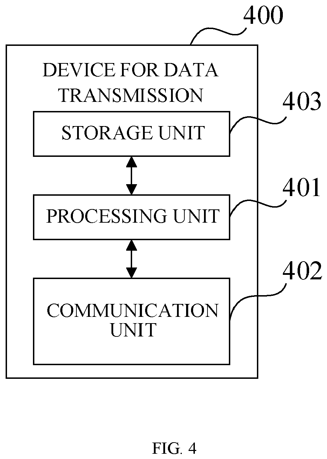

FIG. 4 is a block diagram illustrating functional units of a device 400 for data transmission according to implementations. The device 400 for data transmission is applicable to an electronic device. A first Wi-Fi link and a second Wi-Fi link are established between the electronic device and at least one terminal device, where the first Wi-Fi link is operable in a station mode and the second Wi-Fi link is operable in a Wi-Fi P2P mode. The device 400 for data transmission includes a processing unit 401 and a communication unit 402. The communication unit 402 can be implemented as a communication controller or other components having communication control function such as a communication logic control circuit and the like. The communication unit 402 for example includes a Wi-Fi module configured to establish the first Wi-Fi link and the second Wi-Fi link.

The processing unit 401 is configured to perform, through the communication unit 402, data transmission with the at least one terminal device over the first Wi-Fi link and the second Wi-Fi link simultaneously, where a transmission frequency band for data transmission over the first Wi-Fi link is different from a transmission frequency band for data transmission over the second Wi-Fi link.

The processing unit 401 can be an application processor or a baseband modem, or a system-on-chip (SoC). The device 400 for data transmission further includes a storage unit 403. The storage unit 403 can be a memory.

According to the implementations, the first Wi-Fi link and the second Wi-Fi link are established between the electronic device and the at least one terminal device, where the first Wi-Fi link is operable in the station mode and the second Wi-Fi link is operable in the Wi-Fi P2P mode. The electronic device performs the data transmission with the at least one terminal device over the first Wi-Fi link and the second Wi-Fi link simultaneously, where the transmission frequency band of the first Wi-Fi link is different from and has no interference with that of the second Wi-Fi link. In this way, the electronic device can enable both the station mode and the P2P mode to perform wireless connection and the data transmission with the at least one terminal device. Compared with a single-channel data transmission mode, the multiple-channel data transmission mode can improve efficiency and flexibility of the data transmission of the electronic device and expand capability of the data transmission of electronic device.

In at least one implementation, in terms of performing, through the communication unit 402, the data transmission with the at least terminal device over the first Wi-Fi link and the second Wi-Fi link simultaneously, the processing unit 401 is configured to transmit, through the communication unit 402, first data with a first terminal device in the at least one terminal device over the first Wi-Fi link, and to transmit, through the communication unit 402, second data with a second terminal device in the at least one terminal device over the second Wi-Fi link, where the first terminal device is the same as or different from the second terminal device.

In at least one implementation, the first data includes at least one of: local data of the electronic device, local data of the first terminal device, and data received by the first terminal device from a first network side. The second data includes at least one of: the local data of the electronic device, local data of the second terminal device, data received by the electronic device from a second network side through a cellular network module, and data received by the electronic device from the first network side over the first Wi-Fi link.

In at least one implementation, the first terminal device is different from the second terminal device and the second data is data received by the electronic device from a second network side through a cellular network module. In terms of transmitting, through the communication unit 402, the second data with the second terminal device in the at least one terminal device over the second Wi-Fi link, the processing unit 401 is configured to, through the communication unit 402, receive a first network service request from the second terminal device over the second Wi-Fi link, send, with the cellular network module, the first network service request to a network device at the second network side, receive, with the cellular network module, first response data for the first network service request from the network device at the second network side, and send the first response data to the second terminal device over the second Wi-Fi link.

In at least one implementation, the first terminal device is different from the second terminal device and the second data is data received by the electronic device from a first network side over the first Wi-Fi link. In terms of transmitting, through the communication unit 402, the second data with the second terminal device in the at least one terminal device over the second Wi-Fi link, the processing unit 401 is configured to, through the communication unit 402, receive a second network service request from the second terminal device over the second Wi-Fi link, send the second network service request to the first terminal device over the first Wi-Fi link, where the second network service request is used for the first terminal device to receive second response data for the second network service request, which is returned from a network device at the first network side, after the first terminal device sends the second network service request to the network device at the first network side, receive the second response data from the first terminal device over the first Wi-Fi link, and send the second response data to the second terminal device over the second Wi-Fi link.

In at least one implementation, the first data is data received by the first terminal device from the first network side. In terms of sending, through the communication unit 402, the second network service request to the first terminal device over the first Wi-Fi link, the processing unit 401 is configured to: determine a priority of the second network service request and a priority of a third network service request, where the third network service request is from the electronic device, and send, through the communication unit 402, the second network service request to the first terminal device over the first Wi-Fi link according to the priority of the second network service request.

In at least one implementation, the processing unit 401 is further configured to transmit, through the communication unit 402, third data with the second terminal device over the second Wi-Fi link, after the second network service request is received, through the communication unit 402, from the second terminal device over the second Wi-Fi link and before the second response data is sent, through the communication unit 402, to the second terminal device over the second Wi-Fi link, where the third data includes at least one of: local data of the electronic device, local data of the second terminal device, data received by the electronic device from a second network side through a cellular network module, and data received by the electronic device from the first network side over the first Wi-Fi link.

In at least one implementation, the processing unit 401 is further configured to: enable a dual Wi-Fi operating mode of a Wi-Fi module of the electronic device, establish, through the communication unit 402, the first Wi-Fi link with the first terminal device, and establish, through the communication unit 402, the second Wi-Fi link with the second terminal device.

In at least one implementation, a function achieved by the electronic device over the first Wi-Fi link and the second Wi-Fi link includes at least one of: mobile phone transfer, file transfer, game, network sharing, and one-way control function for the at least one terminal device.

Implementations of the application further provide a non-transitory computer readable storage medium. The non-transitory computer readable storage medium is configured to store a computer program which, when executed by a processor, causes the processor to execute the method of any of the above implementations.

It is to be noted that, for the sake of simplicity, the foregoing method implementations are described as a series of action combinations, however, it will be appreciated by those skilled in the art that the present disclosure is not limited by the sequence of actions described. According to the present disclosure, certain steps or operations may be performed in other order or simultaneously. Besides, it will be appreciated by those skilled in the art that the implementations described in the specification are exemplary implementations and the actions and modules involved are not necessarily essential to the present disclosure.

In the foregoing implementations, the description of each implementation has its own emphasis. For the parts not described in detail in one implementation, reference may be made to related descriptions in other implementations.

In the implementations of the disclosure, the apparatus disclosed in implementations provided herein may be implemented in other manners. For example, the device/apparatus implementations described above are merely illustrative; for instance, the division of the unit is only a logical function division and there can be other manners of division during actual implementations, for example, multiple units or components may be combined or may be integrated into another system, or some features may be ignored, omitted, or not performed. In addition, coupling or communication connection between each illustrated or discussed component may be direct coupling or communication connection, or may be indirect coupling or communication among devices or units via some interfaces, and may be electrical connection, mechanical connection, or other forms of connection.

The units described as separate components may or may not be physically separated, the components illustrated as units may or may not be physical units, that is, they may be in the same place or may be distributed to multiple network elements. All or part of the units may be selected according to actual needs to achieve the purpose of the technical solutions of the implementations.

In addition, the functional units in various implementations of the present disclosure may be integrated into one processing unit, or each unit may be physically present, or two or more units may be integrated into one unit. The above-mentioned integrated unit can be implemented in the form of hardware or a software function unit.

The integrated unit may be stored in a computer readable memory when it is implemented in the form of a software functional unit and is sold or used as a separate product. Based on such understanding, the technical solutions of the present disclosure essentially, or the part of the technical solutions that contributes to the related art, or all or part of the technical solutions, may be embodied in the form of a software product which is stored in a memory and includes instructions for causing a computer device (which may be a personal computer, a server, or a network device and so on) to perform all or part of the steps described in the various implementations of the present disclosure. The memory includes various medium capable of storing program codes, such as a USB (universal serial bus) flash disk, a read-only memory (ROM), a random-access memory (RAM), a removable hard disk, Disk, compact disc (CD), or the like.

It will be understood by those of ordinary skill in the art that all or a part of the various methods of the implementations described above may be accomplished by means of a program to instruct associated hardware, the program may be stored in a computer readable memory, which may include a flash memory, a read-only memory (ROM), a random-access memory (RAM), Disk or compact disc (CD), and so on.

## Claims

1. A method for data transmission for an electronic device, wherein a first wireless-fidelity, Wi-Fi, link and a second Wi-Fi link are established between the electronic device and at least one terminal device, and wherein the first Wi-Fi link is operable in a station mode and the second Wi-Fi link is operable in a Wi-Fi peer-to-peer, P2P, mode, the method comprising:
transmitting first data with a first terminal device in the at least one terminal device over the first Wi-Fi link and transmitting second data with a second terminal device in the at least one terminal device over the second Wi-Fi link simultaneously, wherein a transmission frequency band for data transmission over the first Wi-Fi link is different from a transmission frequency band for data transmission over the second Wi-Fi link;
wherein the first terminal device is different from the second terminal device and the second data is data received by the electronic device from a network device of a first network over the first Wi-Fi link, and transmitting the second data with the second terminal device in the at least one terminal device over the second Wi-Fi link comprises:
receiving a second network service request from the second terminal device over the second Wi-Fi link;
determining a priority of the second network service request and a priority of a third network service request, wherein the first data is data received by the first terminal device from the network device of the first network, and the third network service request is from the electronic device;
sending the second network service request to the first terminal device over the first Wi-Fi link, based on a determination that the priority of the second network service request is higher than that of the third network service request;
receiving second response data from the first terminal device over the first Wi-Fi link, wherein the second response data is received by the first terminal device from a network device of the first network after the first terminal device forwards the second network service request to the network device of the first network; and
sending the second response data to the second terminal device over the second Wi-Fi link.

2. The method of claim 1, further comprising:
after receiving the second network service request from the second terminal device over the second Wi-Fi link and before sending the second response data to the second terminal device over the second Wi-Fi link,
transmitting third data with the second terminal device over the second Wi-Fi link, wherein the third data comprises at least one of: local data of the electronic device, local data of the second terminal device, data received by the electronic device from a network device of a second network through a cellular network module, and data received by the electronic device from a network device of the first network over the first Wi-Fi link.

3. The method of claim 1 or 2, further comprising:
enabling a dual Wi-Fi operating mode of a Wi-Fi module of the electronic device;
establishing the first Wi-Fi link with the first terminal device; and
establishing the second Wi-Fi link with the second terminal device.

4. An electronic device (300), comprising a communication controller (330), at least one processor (310), and a computer readable storage (320) coupled to the at least one processor (310) and storing at least one computer executable instruction (321) thereon, wherein
the communication controller (330) is configured to establish a first wireless-fidelity, Wi-Fi, link and a second Wi-Fi link between the electronic device (300) and at least one terminal device, wherein the first Wi-Fi link is operable in a station mode and the second Wi-Fi link is operable in a Wi-Fi point-to-point, P2P, mode; and
the at least one computer executable instruction (321), when executed by the at least one processor (310), causes the at least one processor (310) to carry out the method of any of claims 1 to 3.

5. A non-transitory computer readable storage medium comprising instructions which, when executed by an electronic device, cause the electronic device to carry out the method of any of claims 1 to 3.

## Patentansprüche

1. Verfahren zur Datenübertragung für eine elektronische Vorrichtung, wobei eine erste Wireless-Fidelity-,Wi-Fi-,Verbindung und eine zweite Wi-Fi-Verbindung zwischen der elektronischen Vorrichtung und mindestens einer Endgerätevorrichtung hergestellt werden, und wobei die erste Wi-Fi-Verbindung in einem Stationsmodus betrieben werden kann, und die zweite Wi-Fi-Verbindung in einem Wi-Fi-Peer-to-Peer-,P2P-,Modus betrieben werden kann, wobei das Verfahren umfasst:
Übertragen von ersten Daten mit einer ersten Endgerätevorrichtung in der mindestens einen Endgerätevorrichtung über die erste Wi-Fi-Verbindung und gleichzeitiges Übertragen von zweiten Daten mit einer zweiten Endgerätevorrichtung in der mindestens einen Endgerätevorrichtung über die zweite Wi-Fi-Verbindung, wobei ein Übertragungsfrequenzband zur Datenübertragung über die erste Wi-Fi-Verbindung von einem Übertragungsfrequenzband zur Datenübertragung über die zweite Wi-Fi-Verbindung verschieden ist;
wobei die erste Endgerätevorrichtung von der zweiten Endgerätevorrichtung verschieden ist, und die zweiten Daten Daten sind, die durch die elektronische Vorrichtung von einer Netzwerkvorrichtung eines ersten Netzwerks über die erste Wi-Fi-Verbindung empfangen werden, und das Übertragen der zweiten Daten mit der zweiten Endgerätevorrichtung in der mindestens einen Endgerätevorrichtung über die zweite Wi-Fi-Verbindung umfasst:
Empfangen einer zweiten Netzwerkdienstanforderung von der zweiten Endgerätevorrichtung über die zweite Wi-Fi-Verbindung;
Bestimmen einer Priorität der zweiten Netzwerkdienstanforderung und einer Priorität einer dritten Netzwerkdienstanforderung, wobei die ersten Daten Daten sind, die durch die erste Endgerätevorrichtung von der Netzwerkvorrichtung des ersten Netzwerks empfangen werden, und die dritte Netzwerkdienstanforderung von der elektronischen Vorrichtung ist;
Senden der zweiten Netzwerkdienstanforderung basierend auf einer Bestimmung, dass die Priorität der zweiten Netzwerkdienstanforderung höher als die der dritten Netzwerkdienstanforderung ist, über die erste Wi-Fi-Verbindung an die erste Endgerätevorrichtung;
Empfangen von zweiten Antwortdaten von der ersten Endgerätevorrichtung über die erste Wi-Fi-Verbindung, wobei die zweiten Antwortdaten nach dem Weiterleiten der zweiten Netzwerkdienstanforderung durch die erste Endgerätevorrichtung an eine Netzwerkvorrichtung des ersten Netzwerks durch die erste Endgerätevorrichtung von der Netzwerkvorrichtung des ersten Netzwerks empfangen werden; und
Senden der zweiten Antwortdaten über die zweite Wi-Fi-Verbindung an die zweite Endgerätevorrichtung.

2. Verfahren nach Anspruch 1, ferner umfassend:
nach dem Empfangen der zweiten Netzwerkdienstanforderung von der zweiten Endgerätevorrichtung über die zweite Wi-Fi-Verbindung und vor dem Senden der zweiten Antwortdaten über die zweite Wi-Fi-Verbindung an die zweite Endgerätevorrichtung
Übertragen von dritten Daten mit der zweiten Endgerätevorrichtung über die zweite Wi-Fi-Verbindung, wobei die dritten Daten mindestens eines umfassen von:
lokalen Daten der elektronischen Vorrichtung, lokalen Daten der zweiten Endgerätevorrichtung, Daten, die durch die elektronische Vorrichtung von einer Netzwerkvorrichtung eines zweiten Netzwerks durch eine Zellularnetzwerkmodul empfangen werden, und Daten, die durch die elektronische Vorrichtung von einer Netzwerkvorrichtung des ersten Netzwerks über die erste Wi-Fi-Verbindung empfangen werden.

3. Verfahren nach Anspruch 1 oder 2, ferner umfassend:
Aktivieren eines Dual-Wi-Fi-Betriebsmodus eines Wi-Fi-Moduls der elektronischen Vorrichtung;
Herstellen der ersten Wi-Fi-Verbindung mit der ersten Endgerätevorrichtung; und
Herstellen der zweiten Wi-Fi-Verbindung mit der zweiten Endgerätevorrichtung.

4. Elektronische Vorrichtung (300), umfassend eine Kommunikationssteuerung (330), mindestens einen Prozessor (310) und einen computerlesbaren Speicher (320), der mit dem mindestens einen Prozessor (310) gekoppelt ist und mindestens eine computerausführbare Anweisung (321) darauf speichert, wobei
die Kommunikationssteuerung (330) zum Herstellen einer ersten Wireless-Fidelity-,Wi-Fi-,Verbindung und einer zweiten Wi-Fi-Verbindung zwischen der elektronischen Vorrichtung (300) und mindestens einer Endgerätevorrichtung konfiguriert ist, wobei die erste Wi-Fi-Verbindung in einem Stationsmodus betrieben werden kann, und die zweite Wi-Fi-Verbindung in einem Wi-Fi-Peer-to-Peer-,P2P-,Modus betrieben werden kann; und
die mindestens eine computerausführbare Anweisung (321) bei Ausführung durch den mindestens einen Prozessor (310) den mindestens einen Prozessor (310) zum Durchführen der Verfahrens nach einem der Ansprüche 1 bis 3 veranlasst.

5. Nichtflüchtiges, computerlesbares Speichermedium, umfassend Anweisungen, die bei Ausführung durch eine elektronische Vorrichtung die elektronische Vorrichtung zum Durchführen des Verfahrens nach einem der Ansprüche 1 bis 3 veranlassen.

## Revendications

1. Procédé de transmission de données pour un dispositif électronique, dans lequel une première liaison de fidélité sans fil, Wi-Fi, et une seconde liaison Wi-Fi sont établies entre le dispositif électronique et au moins un dispositif terminal, et dans lequel la première liaison Wi-Fi est exploitable dans un mode de station et la seconde liaison Wi-Fi est exploitable dans un mode de réseau Wi-Fi de pair à pair, P2P, le procédé comprenant :
la transmission de premières données avec un premier dispositif terminal dans l'au moins un dispositif terminal sur la première liaison Wi-Fi et la transmission simultanée de deuxièmes données avec un second dispositif terminal dans l'au moins un dispositif terminal sur la seconde liaison Wi-Fi, dans lequel une bande de fréquences de transmission pour la transmission de données sur la première liaison Wi-Fi est différente d'une bande de fréquences de transmission pour la transmission de données sur la seconde liaison Wi-Fi ;
dans lequel le premier dispositif terminal est différent du second dispositif terminal et les deuxièmes données sont des données reçues par le dispositif électronique à partir d'un dispositif de réseau d'un premier réseau sur la première liaison Wi-Fi, et la transmission des deuxièmes données avec le second dispositif terminal dans l'au moins un dispositif terminal sur la seconde liaison Wi-Fi comprend :
la réception d'une deuxième demande de service réseau à partir du second dispositif terminal sur la seconde liaison Wi-Fi ;
la détermination d'une priorité de la deuxième demande de service réseau et d'une priorité d'une troisième demande de service réseau, dans lequel les premières données sont des données reçues par le premier dispositif terminal à partir du dispositif de réseau du premier réseau, et la troisième demande de service réseau provient du dispositif électronique ;
l'envoi de la deuxième demande de service réseau au premier dispositif terminal sur la première liaison Wi-Fi, quand il est déterminé que la priorité de la deuxième demande de service réseau est supérieure à celle de la troisième demande de service réseau ;
la réception de deuxièmes données de réponse à partir du premier dispositif terminal sur la première liaison Wi-Fi, dans lequel les deuxièmes données de réponse sont reçues par le premier dispositif terminal à partir d'un dispositif de réseau du premier réseau après que le premier dispositif terminal a transmis la deuxième demande de service réseau au dispositif de réseau du premier réseau ; et
l'envoi des deuxièmes données de réponse au second dispositif terminal sur la seconde liaison Wi-Fi.

2. Procédé selon la revendication 1, comprenant en outre :
après la réception de la deuxième demande de service réseau à partir du second dispositif terminal sur la seconde liaison Wi-Fi et avant l'envoi des deuxièmes données de réponse au second dispositif terminal sur la seconde liaison Wi-Fi,
la transmission de troisième données avec le second dispositif terminal sur la seconde liaison Wi-Fi, dans lequel les troisièmes données comprennent au moins : des données locales du dispositif électronique et/ou des données locales du second dispositif terminal et/ou des données reçues par le dispositif électronique à partir d'un dispositif de réseau d'un second réseau par le biais d'un module de réseau cellulaire et/ou des données reçues par le dispositif électronique à partir d'un dispositif de réseau du premier réseau sur la première liaison Wi-Fi.

3. Procédé selon la revendication 1 ou 2, comprenant en outre :
l'activation d'un double mode de fonctionnement Wi-Fi d'un module Wi-Fi du dispositif électronique ;
l'établissement de la première liaison Wi-Fi avec le premier dispositif terminal ; et
l'établissement de la seconde liaison Wi-Fi avec le second dispositif terminal.

4. Dispositif électronique (300), comprenant un contrôleur de communication (330), au moins un processeur (310) et une mémoire lisible par ordinateur (320) couplée à l'au moins un processeur (310) et mémorisant au moins une instruction exécutable par ordinateur (321), dans lequel
le contrôleur de communication (330) est configuré pour établir une première liaison sans fil, Wi-Fi, et une seconde liaison Wi-Fi entre le dispositif électronique (300) et au moins un dispositif terminal, dans lequel la première liaison Wi-Fi est exploitable dans un mode de station et la seconde liaison Wi-Fi est exploitable dans un mode Wi-Fi point à point, P2P ; et
l'au moins une instruction exécutable par ordinateur (321), à son exécution par l'au moins un processeur (310), amène l'au moins un processeur (310) à mettre en œuvre le procédé selon l'une des revendications 1 à 3.

5. Support de mémorisation non transitoire lisible par ordinateur comprenant des instructions qui, à leur exécution par un dispositif électronique, amènent le dispositif électronique à mettre en œuvre le procédé selon l'une quelconque des revendications 1 à 3.
